(19) Europäisches Patentamt
European Patent Office
Office européen des brevets

(11) **EP 2 375 709 B1**

(12) **EUROPEAN PATENT SPECIFICATION**

(45) Date of publication and mention
of the grant of the patent:
**24.01.2018  Bulletin 2018/04**

(51) Int Cl.:
***H04M 1/725*** *(2006.01)*    *H04M 1/60* *(2006.01)*

(21) Application number: **11161395.6**

(22) Date of filing: **06.04.2011**

(54) **Method and apparatus for providing active connection to electronic devices**

Verfahren und Vorrichtung zur Bereitstellung einer aktiven Verbindung an elektronische Vorrichtungen

Procédé et appareil pour la fourniture d'une connexion active à des dispositifs électroniques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2010  US 321349 P**

(43) Date of publication of application:
**12.10.2011  Bulletin 2011/41**

(73) Proprietor: **BlackBerry Limited
Waterloo, ON N2K 0A7 (CA)**

(72) Inventors:
  • **Yanai, Yoav Sachnovsky
    Waterloo Ontario N2L 3W8 (CA)**

  • **Meunier, Marc Elis
    Waterloo Ontario N2L 3W8 (CA)**

(74) Representative: **Fennell, Gareth Charles et al
Kilburn & Strode LLP
Lacon London
84 Theobalds Road
London WC1X 8NL (GB)**

(56) References cited:
**EP-A1- 2 073 512    US-A1- 2006 135 204
US-A1- 2007 004 472    US-A1- 2007 206 829**

**Description**

FIELD OF INVENTION

The present patent disclosure relates generally to communication of information between electronic devices and in particular to communication of information between a wireless accessory and a plurality of electronic devices.

BACKGROUND

Short-range wireless systems provide interconnections between wireless devices, and wireless accessories. Generally, short-range wireless systems use a wireless personal area network (PAN), which uses low-cost, low-power wireless devices that have a typical range of tens of meters.

An example of a wireless PAN technology uses the Bluetooth™ protocol. Bluetooth™ operates in the 2.4 GHz Industrial, Scientific, and Medical (ISM) band and provides a peak air-link speed of one Mbps and a power consumption low enough for use in personal, portable electronics such as a personal digital assistant or mobile phone.

A piconet is a network linking a group of wireless devices that are physically close enough to exchange information using Bluetooth™. Wireless devices joining and leaving the network as they enter and leave the proximity of the remaining wireless devices. Each Bluetooth™ device is capable to find other Bluetooth™ devices as they enter and leave the effective range of the short-range wireless network. The requesting Bluetooth™ device in a client role and the responding Bluetooth™ device in a server role establish a proximity link between the two devices in a process called pairing. Two devices need to be paired once to communicate with each other. A pairing is usually established through a semi-automatic process. For example, a wireless accessory may send a signal identifying itself as a Bluetooth-enabled device. A mobile phone detects this signal and thus determines that the accessory is available for pairing. The mobile phone then prompts the user to enter a "passcode" or "PIN code" for the accessory. Once a pairing has been established, it is remembered by the devices, which can then connect to each other without user intervention.

In order to use Bluetooth wireless technology, a device must be able to interpret certain Bluetooth profiles. Bluetooth profiles are general behaviors through which Bluetooth enabled devices communicate with other devices.

For example, a Hands Free Profile (HFP) describes how a device such as a mobile device can be used to place and receive calls for a hands-free device; an Advanced Audio Distribution Profile (A2DP) describes how stereo quality audio can be streamed to an accessory, for example, from a media player. Bluetooth technology defines a wide range of profiles that describe many different types of applications, for example, Audio/Video Remote Control Profile (AVRCP), Basic Printing Profile (BPP), Fax Profile (FAX), File Transfer Profile (FTP), Generic Audio/Video Distribution Profile (GAVDP), Generic Access Profile (GAP), Human Interface Device Profile (HID), Headset Profile (HSP), LAN Access Profile (LAP), Personal Area Networking Profile (PAN), Serial Port Profile (SPP), Health Device Profile (HDP), the Message Access Profile (MAP) and Service Discovery Application Profile (SDAP).

Other examples of wireless PAN technology include Infrared Data Association (IrDA), Ultra-Wideband (UWB), Z-Wave and ZigBee.

Today's wireless accessories are expected to offer more than one single connection to a single mobile device. Users are likely to carry with them more than one mobile device at a time, and may want to use the hands-free device, for example, headset or car-kit, with the mobile devices. Multiple independent and concurrent connections may exist. These independent and concurrent connections may be between the wireless accessory and mobile devices. Alternatively, one connection may be between a mobile phone and a wireless accessory and a second connection may be between an audio device and the hands-free device.

When an outgoing command, for example, last number redial, is sent from the wireless accessory to, for example, two mobile devices, which are connected to the hands-free device, there could be ambiguity as to which of the two mobile devices the command is addressed.

It would be highly undesirable, that the outgoing command from the wireless accessory activates dialing on both mobile devices simultaneously.

One possible solution to this problem is to address the mobile device last paired. This is, however, static, rigid and unintuitive. The user may not remember which of the two mobile devices the wireless accessory was last paired with. The last paired device may not necessarily be the device more actively used. The last paired device may not be the device the user desires to engage from the wireless accessory device. Further, the last paired mobile device may not be the mobile device the use desires to dial. For example, if a user has a work related phone and a private phone, on the way driving home, she may wish to use her private phone to make a private phone call. Using a voice command from her wireless headset, she wishes to connect to that phone. However, if the wireless headset has two service connections to the work related phone and the private phone, a command issued to the last-dialed work phone would not be a desired choice. In general, this arbitrary behavior may be not in line with the user's expectations.

Therefore, there is a need to provide a dynamic, user-friendly and intuitive method for sending a command from the wireless accessory to a plurality of devices.

US 2007/0206829 discloses an audio headset usable for conducting a voice call through a phone, and for playing audio, such as music, from a streaming audio device, by means of a speaker.

BRIEF DESCRIPTION OF THE DRAWINGS

These and other features of the patent disclosure will become more apparent from the following description in which reference is made to the appended drawings wherein:

FIG. 1 is an overview of a short-range wireless system in which the present patent disclosure may be implemented;

FIG. 2 is an exemplary timing diagram depicting interactions between a wireless accessory and a mobile device;

FIG. 3 shows a headphone as an example of the wireless accessory of FIG. 1;

FIG. 4 is a block diagram illustrating two connections using an exemplary Bluetooth stack at the hands-free device;

FIG. 5 is a block diagram illustrating an exemplary Bluetooth enabled hands-free device;

FIG. 6 shows an exemplary flow diagram for selecting a mobile device to receive a request;

FIG. 7 shows another exemplary flow diagram for selecting a mobile device to receive a request after considering additional criteria;

FIG. 8 shows selection of an active connection in accordance with one embodiment; FIG. 9 shows selection of an active connection in accordance with another embodiment; and

FIG. 10 shows an exemplary flow diagram for selection of an active connection in accordance with another embodiment.

DETAILED DESCRIPTION

Aspects and features of the present invention are defined in the accompanying claims.
In accordance with an example of the present patent disclosure there is provided a method for choosing an active connection from connections between a wireless accessory and a plurality of mobile devices in a short-range wireless system. The method comprises establishing the connections between the wireless accessory and the plurality of mobile devices; receiving at the wireless accessory a request for an active connection; selecting the active connection dynamically from the connections based on a criteria; sending the request from the wireless accessory to a device through the active connection; and communicating on the active connection.
In accordance with another example of the present patent disclosure there is provided a wireless accessory used in a short-range wireless system, the wireless accessory comprises a transceiver for communicating with a plurality of mobile devices; a memory including a device list; and a processor for: establishing connections between the wireless accessory and the plurality of mobile devices; receiving at the wireless accessory a request for an active connection; selecting dynamically the active connection from the connections based on a criteria; sending the request from the wireless accessory to a device through the active connection; and communicating on the active connection.
In accordance with another example of the present patent disclosure there is provided a computer readable storage medium storing instructions or statements for use in the execution in a processor of a method for choosing an active connection from connections between a wireless accessory and a plurality of mobile devices in a short-range wireless system, the method comprises: establishing connections between the wireless accessory and the plurality of mobile devices; receiving at the wireless accessory a request for an active connection; selecting dynamically the active connection from the connections based on a criteria; sending the request from the wireless accessory to a device through the active connection; and communicating on the active connection.
In some examples, the short-range wireless system is a BluetoothTM system; and the establishing connections comprises pairing the wireless accessory with the plurality of mobile devices .
In some examples, the criteria is a first criteria, further comprising: considering an additional criteria.
In some examples, the active connection is selected at a mobile device of the plurality of mobile devices, further comprising: establishing a communication channel between the wireless accessory and the mobile device; receiving a connection status at the mobile device; and sending a result of the selecting the active connection to the wireless accessory .
In some examples, a device list is provided.
In some examples, the criteria is selected from a group consisting of: a profile, a usage, a frequency of the usage, an assigned priority, and an availability history.
In some examples, the wireless accessory is selected from a group consisting of: a headset, a head phone, an ear phone and a car kit.
In some examples, the mobile device is selected from a group consisting of: a mobile phone, an audio player, an adapter for portable devices, an adapter for home entertainment device, an adapter for personal computers, a personal digital assistants (PDA), a digital camera, and a video game console.

In some examples, the short-range wireless system is a Bluetooth™ system, and the profile is selected from the group consisting of: Hands Free Profile (HFP), Audio Distribution Profile (A2DP), Audio/Video Remote Control Profile (AVRCP), Basic Printing Profile (BPP), Fax Profile (FAX), File Transfer Profile (FTP), Generic Audio/Video Distribution Profile (GAVDP), Generic Access Profile (GAP), Human Interface Device Profile (HID), Headset Profile (HSP), LAN Access Profile (LAP), Personal Area Networking Profile (PAN), Serial Port Profile (SPP), Health Device Profile (HDP), the Message Access Profile (MAP) and Service Discovery Application Profile (SDAP).

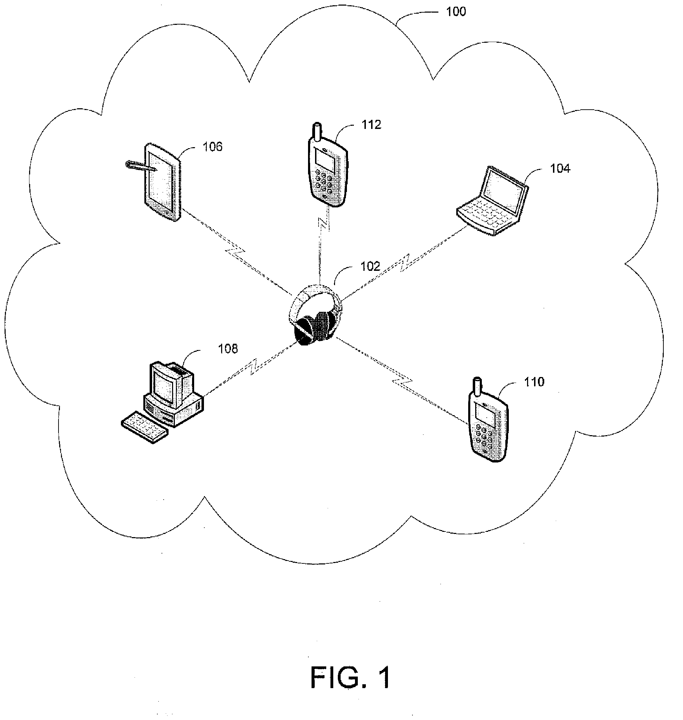

Referring to FIG. 1, a short-range wireless system 100 in which the present patent disclosure may be implemented is shown. A hands-free device 102, for example but not limited to a headphone , is in communication with five wireless devices or accessories: a laptop 104, a tablet computer 106, a personal computer 108, and two mobile phones 110 and 112.

The term "wireless accessory" is intended to describe a device used in a short-range wireless system for originating a request to another device in the short-range wireless system, communicating with the other device and may provide an interface such as an audio and/or visual interface to a user. A wireless accessory may be, for example but not limited to, a headset, a head phone, an ear phone and a car kit, a mouse or a keyboard.

The term "wireless device" is intended to describe a device used in a short-range wireless system for receiving a request from a wireless accessory in the short-range - wireless system, and communicating with the hands-free device. Example of mobile device may be, for example but not limited to, an adapter for portable devices such as personal music players, home entertainment devices such as a home stereo system, or personal computers (PCs Other device or accessory may further include, but not limited to, the wireless devices listed in the above, as well as personal digital assistants (PDA),, pager, Global Positioning System (GPS) receivers, digital cameras, video game consoles, and other accessories capable of communicating with the wireless accessories.

The term "active connection" is intended to describe a connection whereby the data is exchanged between a wireless accessory and a mobile device in a short-range wireless system. The short-range wireless system generally has at least one wireless accessory and a plurality of mobile devices.

The term "request" is intended to describe an information unit sent from the wireless accessory to the mobile devices with the desire to establish an active connection. A request may be a command, for example but not limited to, a command to play music such as play, stop, fast forward, next track; a command to place a call on a wireless device; or a voice dialing command.

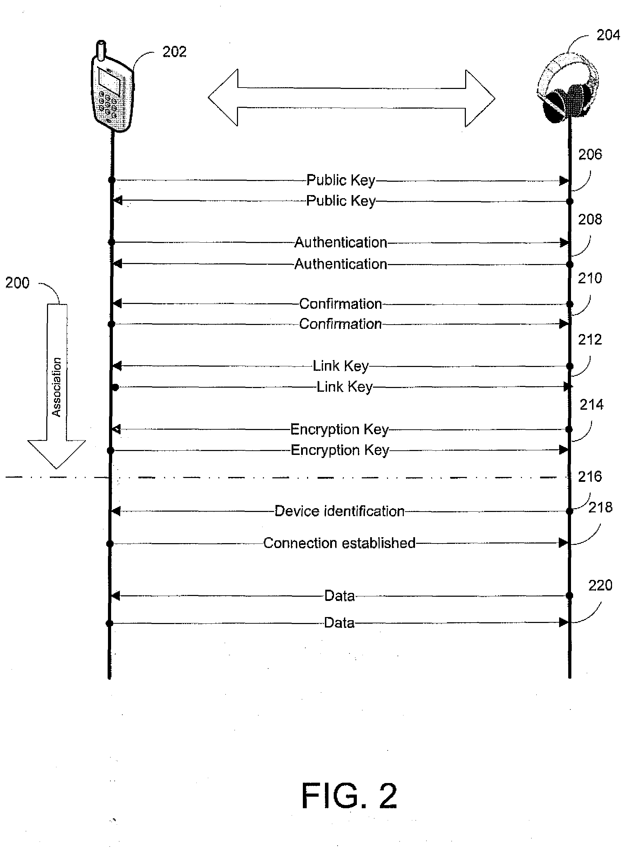

FIG. 2 describes an association 200 between a wireless accessory 204 and a mobile device 202, when a wireless accessory 204 is in the radio coverage area provided by the mobile device 202, the mobile device 202 detects the presence of the wireless accessory 204, while the wireless accessory 204 discovers the service provided by the mobile device 202. In the example of the Bluetooth™, the effective radio coverage area is a piconet. A Bluetooth™ device in discoverable mode transmits on demand information such as device name, device class, list of services, device features, manufacturer, Bluetooth™ specification used, etc..

Using the Bluetooth™ as a non-limiting example, the wireless accessory 204 and the mobile device 202 start to associate by first exchanging public keys 206. The public keys in general need to be generated only once per device and may be computed in advance of pairing. A device may, at any time, choose to discard its public-private key pair and generate a new one, although there is not a requirement to do so. Pairing is initiated by the initiating device sending its public key to the receiving device. The responding device replies with its own public key.

Using the exchanged public keys, each wireless device authenticates the other wireless device 208. A number of protocols is available for authentication, for example but not limited to, numeric comparison, out-of-band (OOB), Just Works, and passkey entry. The authentication generally results in a new shared key between the mobile device 202 and the wireless accessory 204.

The mobile device 202 and the wireless accessory 204 may further compute 210 a new confirmation value that includes the previously exchanged values and the newly derived shared key.

During the link key exchange 212, a link key, used to maintain the pairing, is computed by the mobile device 202 and the wireless accessory 204 from the derived shared key and the previously publicly exchanged data.

Finally, an encryption key is generated 214 for the association 200 between the mobile device 202 and the wireless accessory 204.

The above steps are described using the Bluetooth™ technology as an example, it should be apparent to a person skilled in the art that other technologies may be used for the short-range wireless system.

Once the wireless accessory 204 is associated with the mobile device 202, an identification of the wireless accessory 204 is sent to the mobile device 202 216 and a connection is established 218. If there is a data communication between the mobile device 202 and the wireless accessory 204, data is exchanged between the mobile device 202 and the wireless accessory 204 220.

It should be apparent to a skilled person in the art that many steps such as authentication, encryption may be optional as the requirements for the security vary from profile to profile. For example, if an audio player is streaming an audio to the wireless accessory 204, the data may not need to be encrypted, and the wireless accessory 204 does not need to be authenticated. The exemplary Bluetooth™ services generally require either encryption or authentication, and as such require pairing before they allow a remote device to use the given service. However, some Bluetooth™ services elect not to explicitly require authentication or encryption so that pairing does not interfere with the user experience. The embodiments of the present patent disclosure as described below can be practiced in any short-range wireless system as long as the mobile device 202 and the wireless accessory 204 are associated 200, and the mobile device 202 is aware of the associated wireless accessory 204.

Bluetooth devices connect with one another according to predetermined profiles. A hands free profile (HFP) describes how a device such as a mobile device can be used to place and receive calls for a wireless accessory such as for example a headset, a head phone, an ear phone or car kit, that is, the hands free device can access some of the functionality of the mobile device through a Bluetooth connection according to HFP. The mobile device itself can be left in a pocket, briefcase, or in the trunk of a car.

An Advanced Audio Distribution Profile (A2DP) describes how stereo quality audio can be streamed to a hands-free device, for example, from a media player. A2DP may support particular coding and decoding schemes such as, for example, several versions of MPEG coding schemes.

A Bluetooth-enabled device may support other profiles. A headset profile (HSP) describes how a Bluetooth enabled headset can communicate via Bluetooth with a computer or other device such as a mobile communication device, so as to act as the computer or mobile communication device's audio input and output interface. A single Bluetooth device may be configured to support multiple profiles, and may connect via multiple profiles simultaneously. For example, a mobile communication device may support both HFP and A2DP.

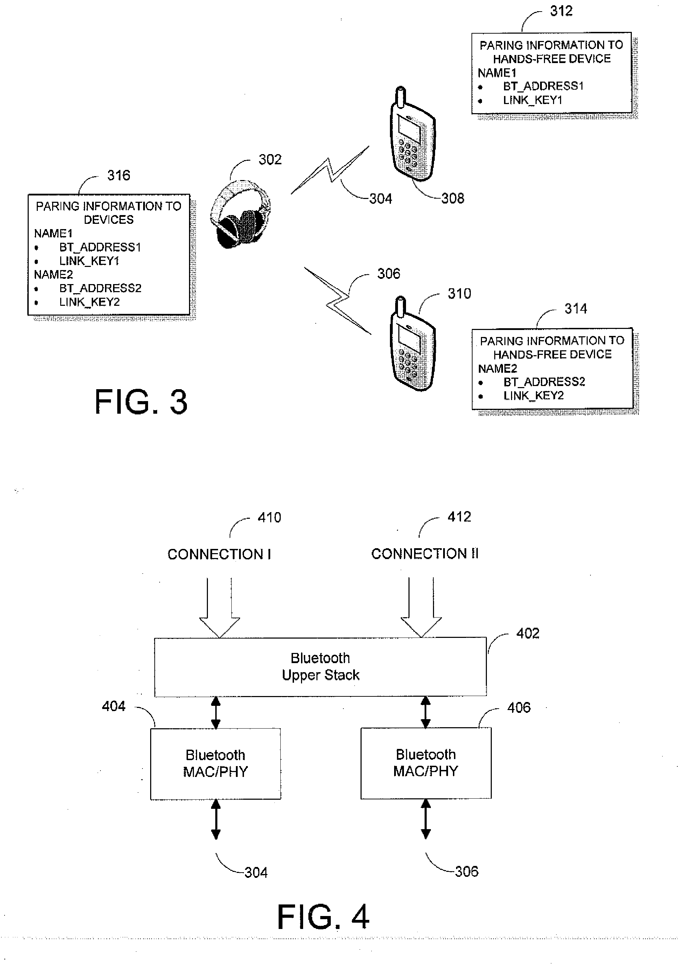

FIG. 3 shows according to an embodiment of the present invention, a wireless accessory 302 as an exemplary use of the wireless accessory of FIG. 1. The wireless accessory 302 may be in simultaneous communication via connections 304, 306 to a mobile device 308 and a second mobile device 310. The wireless accessory 302 is connected 304, 306 to the mobile devices 308, 310, for example, a cell phone, according to a first profile that may be a hands free profile.

The second mobile device 310, may also be another type of device, for example, an MP3 player, according to a second profile that may be an advanced audio distribution profile (A2DP). Each of the first mobile device 308 and the second mobile device 310 contains pairing information 312, 314 that may be sent to the wireless accessory 302. The first mobile device 308 may contain pair information 312 including, for example, a name of the first device, the Bluetooth address of the first mobile device 308, and a link key that may be used for more secure communication between the first mobile device 308 and the wireless accessory 302. Similarly, the second mobile device 310 may contain pairing information 314, for example, a name of the second mobile device 310, the Bluetooth address of the second mobile device 310, and a link key that may be used for more secure communication between the second mobile device 310 and the wireless accessory 302. The names and Bluetooth addresses are passed to the wireless accessory 302 by each of the first mobile device 308 and the second mobile device 310. The wireless accessory 302 stores pair information 316 a name of the wireless accessory and a Bluetooth address, that are passed to the first mobile device 308 and the second mobile device 310. Each of the first mobile device 308 and the second mobile device 310 negotiates a link key with the wireless accessory 302. The link keys are shared between paired devices, that is, there is a link key shared between the first mobile device 308 and the wireless accessory 302, and a second link key shared between the second mobile device 310 and the wireless accessory 302.

FIG. 4 is a block diagram illustrating the two connections 304, 306 using an exemplary Bluetooth stack at the wireless accessory 302. Referring to FIG. 4, there is shown the wireless accessory 302 communicating data after receiving the connections 410, 412, a Bluetooth upper stack 402, and two Bluetooth MAC/PHY (medium access control/physical) layers 404, 406.

Referring to FIGS. 3 and 4, the wireless accessory 302 may utilize the connections 410, 412 in different sessions with the mobile devices 308, 310.

The Bluetooth upper stack 402 may comprise functionalities or layers within the Bluetooth protocol that may enable one or more applications running on top of Bluetooth stack to utilize MAC/PHY layers that may be utilized and/or controlled via the Bluetooth stack. For example, the Bluetooth upper stack 402 may comprise the Bluetooth core. The Bluetooth upper stack 402 may be enabled to interact and/or control a plurality of MAC/PHY layers 404, 406.

The Bluetooth MAC/PHY layers 404, 406 may comprise the Bluetooth PHY layer 214 the Bluetooth protocol to enable MAC in the wireless accessory 302 that may be necessary for enabling utilization of the Bluetooth PHY layer 404, 406. The Bluetooth MAC/PHY layers 404,406 may enable transmission based on Bluetooth protocol. Additionally, the Bluetooth upper stack 402 and/or the Bluetooth MAC/PHY layers 404, 406 may enable performing Bluetooth-based initial discovery, pairing, and/or initial setup operations with the mobile devices 308, 310.

In operation, the wireless accessory 302 may be required to issue a request for an active connection, for example, to initiate a call. The wireless accessory 302 may also utilize the Bluetooth upper stack 402 and the Bluetooth MAC/PHY layers 404, 406 to establish connection with one of the mobile devices 308, 310 using one of the Bluetooth MAC/PHY layers 404, 406. Currently, the issued request for an active connection is generally sent to the last used connection.

In accordance with one embodiment of the present patent disclosure, a criteria is considered and evaluated when a request is sent from the wireless accessory 302 to a mobile device, whereby a second choice is available to receive the same request.

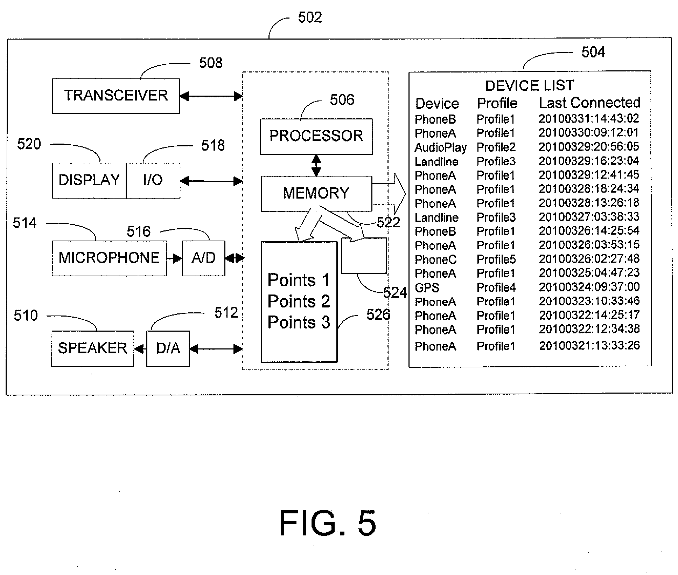

FIG. 5 is a block diagram illustrating an exemplary Bluetooth enabled wireless accessory 502, in accordance with an embodiment of the present patent disclosure patent disclosure. The wireless accessory 502 is capable of communication with another Bluetooth-enabled mobile device for transmission and reception of for example, speech, music, or other data.

Although shown as a hands-free device, the wireless accessory 502 may be for example, a Bluetooth-enabled car kit, or a Bluetooth-enabled adapter for portable devices such as personal music players, home entertainment devices such as a home stereo system, or personal computers (PCs). A PC adapter may connect to a personal computer to enable Bluetooth communication by the computer. A PC adapter can include, for example, a PC USB Bluetooth adapter, or other Bluetooth enabling device configured to be inserted into a particular port on the computer.

The wireless accessory 502 that is capable of pairing with multiple mobile devices includes a processor 506 executing computer instructions. The processor 506 is also coupled to a transceiver 508 that is configured to transmit and receive signals from other devices. The processor 506 may comprise suitable logic, circuitry, and/or code that may enable control and/or management operations in at least portions of the wireless accessory 502. Moreover, the processor 506 may be utilized to process data received by the wireless accessory 502 and/or to process data to be transmitted by wireless accessory 502.

The wireless accessory 502 may further include a speaker 510, a digital-to-analog converter (DAC) 512, a microphone 514, an analog-to-digital converter (ADC) 516, and at least one user I/O device 518. The user I/O device 518 may comprise, for example, a button, a scroll wheel, and/or a display that may be used to input or output information. For example, a button may be used to select a device to be used for placing an outgoing call. The button may be a hardware button or a software enabled button. The display 520 may, for example, show the name of a device that may be currently used and/or that may be selected for placing an outgoing call. Bluetooth software may be stored in the memory 522, where the Bluetooth software may comprise at least some layers of the Bluetooth protocol. The layers of the Bluetooth protocol may comprise, for example, logical link control and adaptation protocol (L2CAP), RFCOMM protocol, and service discovery protocol (SDP).

The SDP layer provides a means for applications to discover which services may be provided by or may be available through a Bluetooth device. The RFCOMM protocol provides emulation of RS232 serial ports over the L2CAP. For example, the RFCOMM may allow support of up to 60 simultaneous connections between two Bluetooth devices.

The L2CAP layer supports higher-level protocol multiplexing, packet segmentation and reassembly, and the conveying of quality of service information. Accordingly, the L2CAP layer provides connection-oriented and connectionless data services to upper layer protocols.

The memory is configured to store data, which may include a device list 504. The memory may further include computer executable code 524 for executing a method according to the embodiments described herein in the processor 506.

The device list 504 may include device names, profile types, and other data relating to devices recently connected to the wireless accessory 502. The device list 504 may list a plurality of devices. For example, the device list 504 may list phone A, phone B, phone C, an audio player, a landline phone, and a GPS, each type of device may have a particular profile.

The device list 504 lists a profile type for each device. For example, phone A and the phone B may connect to the wireless accessory 502, according to Profile 1. Profile 1 may be, for instance, a hands free profile (HFP). The audio player may connect to the wireless accessory 502 according to Profile 2. Profile 2 may be, for example, an advanced audio distribution profile (A2DP).

Other devices listed in the device list 504 may connect according to other profiles, for example, Profiles 3-5.

The device list 504 may further include a time of last connection for each listed device. In FIG.5, the most recently connected Profile 1 device is the cell phone B, last connected at 14:43:02 on Mar. 31, 2010. The second most recently connected Profile 1 device is the phone B, last connected at 9:12:01 on Mar. 30, 2010. In the device list 504, the most recently connected Profile 2 device is the audio player, last connected at 20:56:05 on Mar. 29, 2010.

It should be apparent to a person skilled in the art that the device list 504 is only a non-limiting example. Other parameters, for example, but not limited to, may include: last used for HFP conversation, last used as a music streaming SRC, last used as AVRCP Target. All these parameter can be used as criteria in evaluation and decision, in real time, dynamically, as to which remote wireless device should be addressed.

Referring to FIGS. 3 and 5, in accordance with one embodiments of the present patent disclosure, when a request for an active connection is sent from the wireless accessory 302, 502 to more than one wireless devices, for example but not limited to, phones 308, 310, the request is sent to a phone based on one or more dynamically selected criteria. The dynamically selected criteria may be, but not limited to, the most recent connected phone, the most frequent connected phone, the most frequent connected phone in a given period, the longest connected phone, a profile, an assigned priority, an availability history or a profile based on a priority.

There may be a plurality of outgoing commands from the wireless accessory 302, 502, to be addressed to one and only one wireless device out of several wireless devices, which have a service level connection with the wireless accessory 302, 502. As further discussed, the criteria is evaluated dynamically, rather than statically. Further, the criteria itself may be determined dynamically. This dynamic evaluation is a departure from the existing approaches.

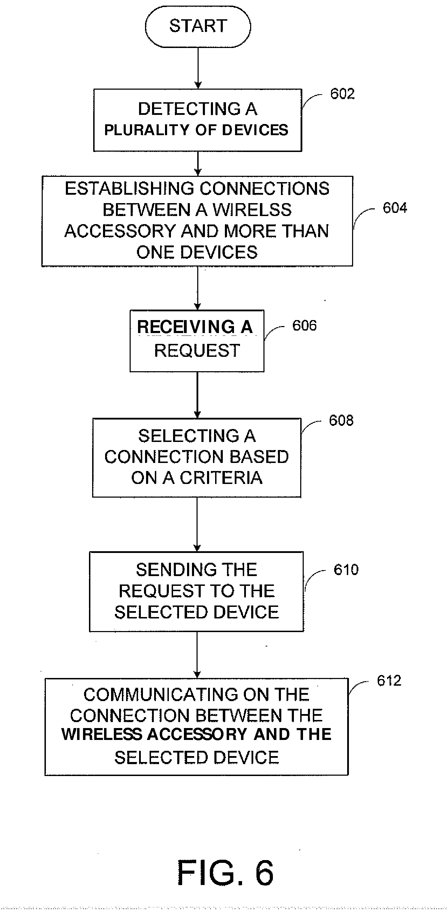

Referring to FIG. 6, an exemplary flow diagram for selecting a mobile device to receive a wireless accessory originated request, in accordance with an embodiment of the patent disclosure, is shown. After powering up a hands-free device, the wireless accessory detects, at 602, a plurality of mobile devices in a short-range wireless system, for example, a Bluetooth system. The wireless accessory establishes, at 604, more than one connections with the mobile devices. The wireless accessory issues a request at 606. Since there are more than one connection to choose from, one of the connections is selected, at 608, as an active connection and the mobile device at the far end of the active connection receives the request at 610. The selection of the active connection and thus the corresponding device is based on a criteria. The communication is established on the active connection between the wireless accessory and the selected mobile device at the other end of the active connection at 612.

Referring to FIGS. 5 and 6, and using a headset as a non-limiting example for the wireless accessory 502, the headset may have a device list 504 as depicted in FIG. 5. The headset may have detected, at 602, several mobile devices, for example, Phone A, Phone B, Phone C, a landline phone capable of communicating with the headset through a short range wireless system, an audio player, and a GPS. The wireless accessory then establishes connections, at 604, to at least some of the mobile devices. When a request is received at the headset, at 606, for example but not limited to, a voice command, or an activation of a button by a user, indicating the user's intention to establish a phone call, the headset selects, at 608, an active connection among the connections to send the request. The selection may be based on a certain criteria, for example, the most frequently used phones. Based on the device list 504, Phone A is the most used phone. Accordingly, in this example, the connection between the headset and Phone A is considered as the active connection. The request is then sent to Phone A, at 610, and the phone call is established between the headset and Phone A at 612.

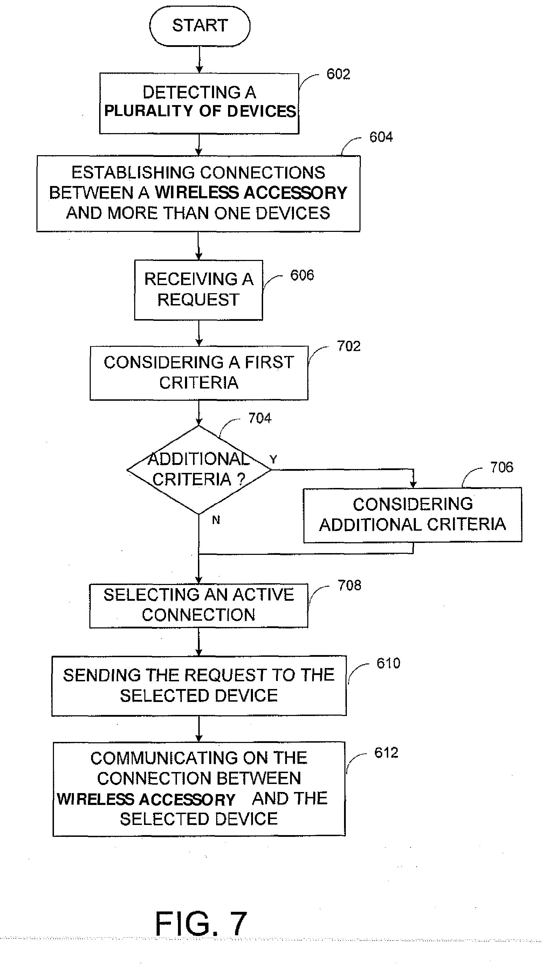

The wireless accessory 502 may consider more than one criteria when selecting an active connection among a plurality of connections. Referring to FIG. 7, after a request is received at 606 as described above, the wireless accessory may consider a first criteria, at 702. If there are additional criteria, at 704, these additional criteria are also considered at 706. The section of an active connection, at 708, is based on these considerations.

Referring to FIGS. 5 and 7, and again using a headset as a non-limiting example for the wireless accessory 502, the headset may have a device list 504 as depicted in FIG. 5.

When a request is received at the headset, at 606, for example but not limited to, a voice command, or an activation of a button by a user, indicating the user's intention to play an audio file, for example, a music piece, the headset 502 to selects an active connection among the connections to send the request.

The selection may initially be based on a first criteria, at 702, for example and in case of Bluetooth connections, the profiles of the connections. In this example, Profile 3 may be an A2DP profile, therefore, Profile 3 is first selected. Other criteria may further be considered, at 706, for example, among Profile 3 devices, which one is the most recent used, which is the most frequently used, etc. An active connection is selected, at 708 based on a combination of the criteria.

In general, many algorithms may be utilized in dynamically evaluating the criteria in FIG. 6 and the one or more criteria in FIG. 7 in deciding which wireless device to pick.

For example, but not limited to, a "point based" formula may be used where every wireless device is dynamically allocated points, and the wireless device to be addressed is the device which has the maximum number of such points. The function to determine these points may include as inputs, for example but not limited to, the parameters shown in the device list 504 in FIG. 5, and a formula

$$\text{Points}_{devX} = f_x \text{ (parameters)}$$

based on statistical methods to determine in run time which wireless device should be addressed by the number of points calculated. Such calculation may take place when the user takes an action, for example, through a GUI event or a voice command.

Referring also to FIG. 5, the calculated points may be stored on the wireless accessory 502 for use in the current session of connections, or for future use in deciding the active connections.

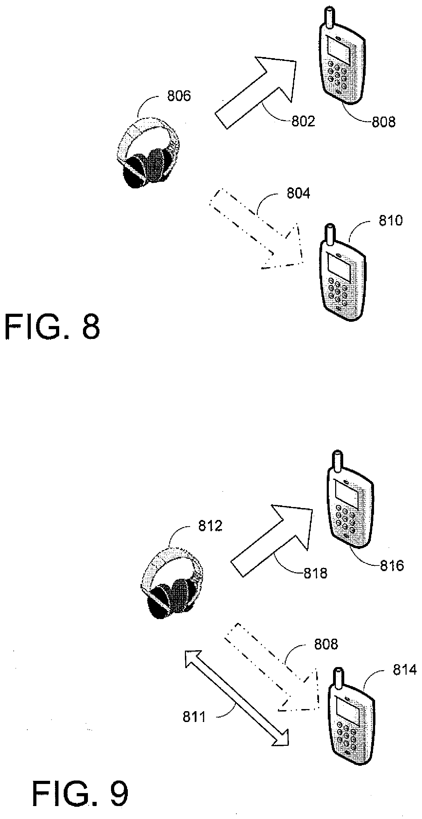

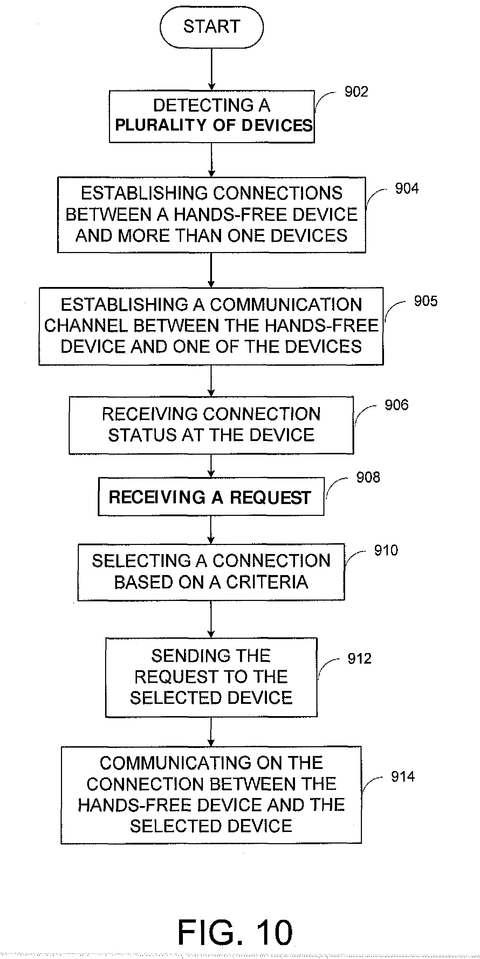

Referring to FIG. 8, an active connection 802 is selected among two connections 802, 804 between the wireless accessory 806 and the mobile devices 808, 810, using the steps as described in FIG. 6 or FIG. 7. In another embodiment of the present patent disclosure, an active connection may also be determined and selected at a mobile device. Referring to FIG. 9 and FIG. 10, the devices in a short-range wireless system may be detected, at 902, by the wireless accessory 812, or one of the mobile devices, for example, mobile device 814. The wireless accessory then establishes connections to at least some of the mobile devices, at 904. A communication channel 810 is established between the wireless accessory 812 and the mobile device 814, at 905. The status of the established connections is communicated 810 to mobile device 814, at 906. The mobile device, in this non-limiting example mobile device 814, may have the device list.

When a request is received at the headset, at 908, for example but not limited to, a voice command, or an activation of a button by a user, indicating the user's intention to establish a phone call, the headset 812 sends 908 the request to mobile device 814. Mobile device 814 selects an active connection among the connections to send the request. The selection may be based on a certain criteria 910, for example, the most frequently used phones. Based on the device list, mobile device 814 may decide that mobile device 816 is the most used phone. Accordingly, in this example, the connection between headset 812 and mobile device 816 is considered as the active connection 818. This selection is then sent to headset 812 through the communication channel 810, and the phone call is established between headset 812 and mobile device 816.

While the patent disclosure is described in conjunction with the specific embodiments, it will be understood that it is not intended to limit the patent disclosure to the described embodiments. On the contrary, it is intended to cover alternatives, modifications, and equivalents as may be included within the scope of the patent disclosure as defined by the appended claims. In the above description, numerous specific details are set forth in order to provide a thorough understanding of the present patent disclosure. The present patent disclosure may be practiced without some or all of these specific details. In other instances, well-known process operations have not been described in detail in order not to unnecessarily obscure the present patent disclosure.

The terminology used herein is for the purpose of describing particular embodiments only and is not intended to be limiting of the patent disclosure. As used herein, the singular forms "a", "an" and "the" are intended to include the plural forms as well, unless the context clearly indicates otherwise. It will be further understood that the terms "comprises" or "comprising", or both when used in this specification, specify the presence of stated features, integers, steps, operations, elements, and/or components, but do not preclude the presence or addition of one or more other features, integers, steps, operations, elements, components, and/or groups thereof.

Embodiments within the scope of the present patent disclosure can be implemented in digital electronic circuitry, or in computer hardware, firmware, software, or in combinations thereof. Apparatus within the scope of the present patent disclosure can be implemented in a computer program product tangibly embodied in a machine-readable storage medium for execution by a programmable processor; and method actions within the scope of the present patent disclosure can be performed by a programmable processor executing a program of instructions to perform functions of the patent disclosure by operating on input data and generating output. Embodiments within the scope of the present patent disclosure may be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files. Embodiments within the scope of the present patent disclosure include computer-readable media for carrying or having computer-executable instructions, computer-readable instructions, or data structures stored thereon. Such computer-readable media may be any available media, which is accessible by a general-purpose or special-purpose computer system. Examples of computer-readable media may include physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system. Any of the foregoing can be supplemented by, or incorporated in, ASICs (application-specific integrated circuits). It should be understood that embodiments of the present patent disclosure may be used in a variety of applications. Although the present patent disclosure is not limited in this respect, the methods disclosed herein may be used in many apparatuses such as in the transmitters, receivers and transceivers of a radio system. Radio systems intended to be included within the scope of the present patent disclosure include, by way of example only, cellular radiotelephone communication systems, satellite communication systems, two-way radio communication systems, one-way pagers, two-way pagers, personal communication systems (PCS), personal digital assistants (PDA's), notebook computers in wireless local area networks (WLAN), wireless metropolitan area networks (WMAN), wireless wide area networks (WWAN), or wireless personal area networks (WPAN, and the like).

## Claims

**1.** A method of choosing an active connection from connections between a wireless accessory (102) and a plurality of mobile devices (104, 106, 108, 110) in a short-range wireless system, the method comprising:

establishing the connections (604) between the wireless accessory and the plurality of mobile devices;
receiving at the wireless accessory a request (606) for an active connection;
providing a device list (504) comprising device names, profile types and other data relating to a usage of a plurality of mobile devices recently connected to the wireless accessory;
in response to receiving at the wireless accessory the request for an active connection, selecting (708) the active connection dynamically from the connections based on real-time evaluation of:

a first criteria (702) selected from a group consisting of: a profile, an assigned priority, and an availability history; and a second criteria (704, 706) relating to the usage data stored in the device list, the selection (708) being based on a combination of the first and second criteria;

sending the request (610) from the wireless accessory to a device through the active connection; and
communicating (612) on the active connection.

2. The method according to claim 1, wherein the short-range wireless system is a Bluetooth™ system; and the establishing connections comprises pairing the wireless accessory (102) with the plurality of mobile devices (104, 106, 108, 110).

3. The method according to claim 1, wherein combination of the first and second criteria is based on a point based formula, where each of the plurality of mobile devices is dynamically allocated points based on the first and second criteria, and the selection is based on the number of points each device has been allocated.

4. The method according to claim 1, wherein the active connection (818) is selected at a mobile device (814) of the plurality of mobile devices, further comprising:

establishing a communication channel between the wireless accessory and the mobile device;
receiving a connection status at the mobile device; and
sending a result of the selecting the active connection to the wireless accessory.

5. The method according to claim 1, wherein the device list further includes at least one of an assigned priority and an availability history.

6. The method according to claim 1, wherein the wireless accessory (102) is selected from a group consisting of: a headset, a head phone, an ear phone and a car kit.

7. The method according to claim 1 wherein the mobile device is selected from a group consisting of: a mobile phone, an audio player, an adapter for portable devices, an adapter for home entertainment device, an adapter for personal computers, a personal digital assistants, PDA, a digital camera, and a video game console.

8. The method according to claim 7 wherein the short-range wireless system is a Bluetooth system, and wherein the profile is selected from a group consisting of: Hands Free Profile, HFP, Audio Distribution Profile, A2DP, Audio/Video Remote Control Profile, AVRCP, Basic Printing Profile, BPP, Fax Profile, FAX, File Transfer Profile, FTP, Generic Audio/Video Distribution Profile, GAVDP, Generic Access Profile, GAP, Human Interface Device Profile, HID, Headset Profile, HSP, LAN Access Profile, LAP, Personal Area Networking Profile, PAN, Serial Port Profile, SPP, Health Device Profile, HDP, the Message Access Profile, MAP, and Service Discovery Application Profile, SDAP.

9. The method according to claim 1, wherein the short-range wireless system uses at least one of Infrared Data Association, IrDA, Ultra-Wideband, UWB, Z-Wave and ZigBee.

10. The method according to claim 1, wherein the short-range wireless system is a wireless personal area network, PAN.

11. The method according to claim 1, wherein the active connection is for a voice call.

12. The method according to claim 1, wherein the request is selected from a group consisting of a voice command and an activation of a button.

13. A wireless accessory (102) used in a short-range wireless system (100), the wireless accessory (102) comprising:

a transceiver (508) configured for communicating with a plurality of mobile devices;
a memory (522) including a device list (504); and
a processor (506) electrically coupled with the transceiver (508) and the memory (522), the processor (506) configured to perform the method of any preceding claim.

14. A computer readable storage medium storing instructions for choosing an active connection from connections between a wireless accessory (102) and a plurality of mobile devices (104, 106, 108, 110) in a short-range wireless system (100), which when executed by a processor, cause the processor to perform the method of any of claims 1 to 12.

**Patentansprüche**

1. Verfahren zum Auswählen einer aktiven Verbindung aus Verbindungen zwischen einem drahtlosen Zubehör (102) und einer Vielzahl von mobilen Vorrichtungen (104, 106, 108, 110) in einem drahtlosen Nahbereichssystem, wobei das Verfahren aufweist:

> Herstellen der Verbindungen (604) zwischen dem drahtlosen Zubehör und der Vielzahl von mobilen Vorrichtungen;
> Empfangen einer Anforderung (606) für eine aktive Verbindung an dem drahtlosen Zubehör;
> Vorsehen einer Vorrichtungsliste (504), die Vorrichtungsnamen, Profiltypen und andere Daten in Bezug auf eine Verwendung einer Vielzahl von mobilen Vorrichtungen aufweist, die kürzlich mit dem drahtlosen Zubehör verbunden waren;
> in Reaktion auf das Empfangen der Anforderung für eine aktive Verbindung an dem drahtlosen Zubehör, dynamisches Auswählen (708) der aktiven Verbindung aus den Verbindungen basierend auf einer Echtzeitevaluierung aus:
>
>> einem ersten Kriterium (702), das aus einer Gruppe ausgewählt ist, die besteht aus: einem Profil, einer zugewiesenen Priorität und einer Verfügbarkeitshistorie; und
>> einem zweiten Kriterium (704, 706), das die Verwendungsdaten betrifft, die in der Vorrichtungsliste gespeichert sind, wobei die Auswahl (708) auf einer Kombination des ersten und des zweiten Kriteriums basiert;
>
> Senden der Anforderung (610) von dem drahtlosen Zubehör an eine Vorrichtung über die aktive Verbindung; und
> Kommunizieren (612) auf der aktiven Verbindung.

2. Das Verfahren gemäß Anspruch 1, wobei das drahtlose Nahbereichssystem ein Bluetooth™ -System ist; und das Herstellen der Verbindungen ein paarweises Zuordnen des drahtlosen Zubehörs (102) mit der Vielzahl von mobilen Vorrichtungen (104, 106, 108, 110) aufweist.

3. Das Verfahren gemäß Anspruch 1, wobei eine Kombination des ersten und des zweiten Kriteriums auf einer Punkt-basierten Formel basiert, wobei jeder der Vielzahl von mobilen Vorrichtungen Punkte basierend auf dem ersten und dem zweiten Kriterium dynamisch zugeteilt werden, und die Auswahl auf der Anzahl von Punkten basiert, die jeder Vorrichtung zugeteilt wurden.

4. Das Verfahren gemäß Anspruch 1, wobei die aktive Verbindung (818) an einer mobilen Vorrichtung (814) der Vielzahl von mobilen Vorrichtungen ausgewählt wird, weiter aufweisend:

> Herstellen eines Kommunikationskanals zwischen dem drahtlosen Zubehör und der mobilen Vorrichtung;
> Empfangen eines Verbindungsstatus an der mobilen Vorrichtung; und
> Senden eines Ergebnisses der Auswahl der aktiven Verbindung an das drahtlose Zubehör.

5. Das Verfahren gemäß Anspruch 1, wobei die Vorrichtungsliste weiter zumindest eines aus einer zugewiesenen Priorität und einer Verfügbarkeitshistorie umfasst.

6. Das Verfahren gemäß Anspruch 1, wobei das drahtlose Zubehör (102) aus einer Gruppe ausgewählt ist, die besteht aus: einem Headset, einem Kopfhörer, einem Ohrhörer und einem Car-Kit.

7. Das Verfahren gemäß Anspruch 1, wobei die mobile Vorrichtung aus einer Gruppe ausgewählt ist, die besteht aus: einem Mobiltelefon, einem Audio-Player, einem Adapter für tragbare Vorrichtungen, einem Adapter für eine Home-Entertainment-Vorrichtung, einem Adapter für Personalcomputer, einem persönlichen digitalen Assistenten (PDA - personal digital assistant), einer Digitalkamera und einer Videospielkonsole.

8. Das Verfahren gemäß Anspruch 7, wobei das drahtlose Nahbereichssystem ein Bluetooth-System ist und wobei das Profil aus einer Gruppe ausgewählt ist, die besteht aus: HFP (Hands Free Profile), A2DP (Audio Distribution Profile), AVRCP (Audio/Video Remote Control Profile), BPP (Basic Printing Profile), FAX (Fax Profile), FTP (File Transfer Profile), GAVDP (Generic Audio/Video Distribution Profile), GAP (Generic Access Profile), HID (Human Interface Device Profile), HSP (Headset Profile), LAP (LAN Access Profile), PAN (Personal Area Networking Profile), SPP (Serial Port Profile), HDP (Health Device Profile), MAP (Message Access Profile) and SDAP (Service Discovery Application Profile).

9. Das Verfahren gemäß Anspruch 1, wobei das drahtlose Nahbereichssystem zumindest eines aus IrDA (Infrared Data Association), UWB (Ultra-Wideband), Z-Wave und ZigBee verwendet.

10. Das Verfahren gemäß Anspruch 1, wobei das drahtlose Nahbereichssystem ein drahtloses PAN (Personal Area Network) ist.

11. Das Verfahren gemäß Anspruch 1, wobei die aktive Verbindung für einen Sprachanruf ist.

12. Das Verfahren gemäß Anspruch 1, wobei die Anforderung aus einer Gruppe ausgewählt wird, die aus einem Sprachbefehl und einer Aktivierung einer Taste besteht.

13. Ein drahtloses Zubehör (102), das in einem drahtlosen Nahbereichssystem (100) verwendet wird, wobei das drahtlose Zubehör (102) aufweist:

einen Transceiver (508), der zum Kommunizieren mit einer Vielzahl von mobilen Vorrichtungen konfiguriert ist;
einen Speicher (522) mit einer Vorrichtungsliste (504); und
einen Prozessor (506), der elektrisch mit dem Transceiver (508) und dem Speicher (522) gekoppelt ist, wobei der Prozessor (506) konfiguriert ist zum Durchführen des Verfahrens gemäß einem vorhergehenden Anspruch.

14. Computerlesbares Speichermedium zum Speichern von Anweisungen zum Auswählen einer aktiven Verbindung aus Verbindungen zwischen einem drahtlosen Zubehör (102) und einer Vielzahl von mobilen Vorrichtungen (104, 106, 108, 110) in einem drahtlosen Nahbereichssystem (100), die, wenn von einem Prozessor ausgeführt, den Prozessor zum Durchführen des Verfahrens gemäß einem der Ansprüche 1 bis 12 veranlassen.

**Revendications**

1. Procédé de choix d'une connexion active parmi des connexions entre un accessoire sans fil (102) et une pluralité de dispositifs mobiles (104, 106, 108, 110) dans un système sans fil à courte portée, le procédé comprenant :

l'établissement des connexions (604) entre l'accessoire sans fil et la pluralité de dispositifs mobiles ;
la réception au niveau de l'accessoire sans fil d'une demande (606) pour une connexion active ;
la fourniture d'une liste de dispositifs (504) comprenant des noms de dispositif, des types de profil et d'autres données relatives à une utilisation d'une pluralité de dispositifs mobiles connectés récemment à l'accessoire sans fil ;
en réponse à la réception au niveau de l'accessoire sans fil de la demande pour une connexion active, la sélection (708) de la connexion active dynamiquement parmi les connexions sur la base d'une évaluation en temps réel de :

un premier critère (702) sélectionné dans un groupe constitué par : un profil, une priorité assignée, et un historique de disponibilité ; et
un second critère (704, 706) relatif aux données d'utilisation stockées dans la liste de dispositifs, la sélection (708) étant basée sur une combinaison des premier et second critères ;

l'envoi de la demande (610) de l'accessoire sans fil à un dispositif par l'intermédiaire de la connexion active ; et
la communication (612) sur la connexion active.

2. Procédé selon la revendication 1, dans lequel le système sans fil à courte portée est un système Bluetooth™ ; et l'établissement de connexions comprend l'appariement de l'accessoire sans fil (102) avec la pluralité de dispositifs mobiles (104, 106, 108, 110).

3. Procédé selon la revendication 1, dans lequel une combinaison des premier et second critères est basée sur une formule à base de points, où chacun de la pluralité de dispositifs mobiles se voit allouer dynamiquement des points sur la base des premier et second critères, et la sélection est basée sur le nombre de points que chaque dispositif s'est vu allouer.

4. Procédé selon la revendication 1, dans lequel la connexion active (818) est sélectionnée au niveau d'un dispositif mobile (814) de la pluralité de dispositifs mobiles, comprenant en outre :

l'établissement d'un canal de communication entre l'accessoire sans fil et le dispositif mobile ;
la réception d'un statut de connexion au niveau du dispositif mobile ; et
l'envoi d'un résultat de la sélection de la connexion active à l'accessoire sans fil.

5. Procédé selon la revendication 1, dans lequel la liste de dispositifs comprend en outre au moins l'un d'une priorité assignée et d'un historique de disponibilité.

6. Procédé selon la revendication 1, dans lequel l'accessoire sans fil (102) est sélectionné dans un groupe constitué par : un casque, un écouteur, une oreillette et un kit de voiture.

7. Procédé selon la revendication 1, dans lequel le dispositif mobile est sélectionné dans un groupe constitué par : un téléphone mobile, un lecteur audio, un adaptateur pour dispositifs portables, un adaptateur pour un dispositif de divertissement à domicile, un adaptateur pour ordinateurs personnels, des assistants numériques personnels, PDA, un appareil photo numérique, et une console de jeux vidéo.

8. Procédé selon la revendication 7, dans lequel le système sans fil à courte portée est un système Bluetooth, et dans lequel le profil est sélectionné dans un groupe constitué par : Profil mains libres, HFP, Profil de distribution audio, A2DP, Profil de commande à distance audio/vidéo, AVRCP, Profil d'impression de base, BPP, Profil de fax, FAX, Profil de transfert de fichier, FTP, Profil de distribution audio/vidéo générique, GAVDP, Profil d'accès générique, GAP, Profil de dispositif d'interface humaine, HID, Profil de casque, HSP, Profil d'accès LAN, LAP, Profil de mise en réseau personnel, PAN, Profil de port série, SPP, Profil de dispositif de santé, HDP, Profil d'accès au message, MAP, et Profil d'application de découverte de service, SDAP.

9. Procédé selon la revendication 1, dans lequel le système sans fil à courte portée utilise au moins l'un parmi Association de données infrarouges, IrDA, Ultralarge bande, UWB, Z-Wave et ZigBee.

10. Procédé selon la revendication 1, dans lequel le système sans fil à courte portée est un réseau personnel, PAN, sans fil.

11. Procédé selon la revendication 1, dans lequel la connexion active est pour un appel vocal.

12. Procédé selon la revendication 1, dans lequel la demande est sélectionnée dans un groupe constitué par une commande vocale et une activation d'un bouton.

13. Accessoire sans fil (102) utilisé dans un système sans fil à courte portée (100), l'accessoire sans fil (102) comprenant :

un émetteur-récepteur (508) configuré pour communiquer avec une pluralité de dispositifs mobiles ;
une mémoire (522) comprenant une liste de dispositifs (504) ; et
un processeur (506) couplé électriquement avec l'émetteur-récepteur (508) et la mémoire (522), le processeur (506) configuré pour effectuer le procédé de l'une quelconque des revendications précédentes.

14. Support de stockage lisible par ordinateur stockant des instructions pour choisir une connexion active parmi des connexions entre un accessoire sans fil (102) et une pluralité de dispositifs mobiles (104, 106, 108, 110) dans un système sans fil à courte portée (100), qui, lorsqu'elles sont exécutées par un processeur, amènent le processeur à effectuer le procédé de l'une quelconque des revendications 1 à 12.

FIG. 1

FIG. 2

312

PARING INFORMATION TO
HANDS-FREE DEVICE
NAME1
• BT_ADDRESS1
• LINK_KEY1

302

304 308

316

PARING INFORMATION TO
DEVICES
NAME1
• BT_ADDRESS1
• LINK_KEY1
NAME2
• BT_ADDRESS2
• LINK_KEY2

306

310

314

PARING INFORMATION TO
HANDS-FREE DEVICE
NAME2
• BT_ADDRESS2
• LINK_KEY2

# FIG. 3

410
CONNECTION I

412
CONNECTION II

402
Bluetooth
Upper Stack

404
Bluetooth
MAC/PHY

406
Bluetooth
MAC/PHY

304

306

# FIG. 4

502

504

508

TRANSCEIVER

506

PROCESSOR

520

518

DISPLAY | I/O

MEMORY

522

514

516

MICROPHONE → A/D

510

512

SPEAKER ◄ D/A

Points 1
Points 2
Points 3

524

526

**DEVICE LIST**

| Device | Profile | Last Connected |
|---|---|---|
| PhoneB | Profile1 | 20100331:14:43:02 |
| PhoneA | Profile1 | 20100330:09:12:01 |
| AudioPlay | Profile2 | 20100329:20:56:05 |
| Landline | Profile3 | 20100329:16:23:04 |
| PhoneA | Profile1 | 20100329:12:41:45 |
| PhoneA | Profile1 | 20100328:18:24:34 |
| PhoneA | Profile1 | 20100328:13:26:18 |
| Landline | Profile3 | 20100327:03:38:33 |
| PhoneB | Profile1 | 20100326:14:25:54 |
| PhoneA | Profile1 | 20100326:03:53:15 |
| PhoneC | Profile5 | 20100326:02:27:48 |
| PhoneA | Profile1 | 20100325:04:47:23 |
| GPS | Profile4 | 20100324:09:37:00 |
| PhoneA | Profile1 | 20100323:10:33:46 |
| PhoneA | Profile1 | 20100322:14:25:17 |
| PhoneA | Profile1 | 20100322:12:34:38 |
| PhoneA | Profile1 | 20100321:13:33:26 |

# FIG. 5

START

DETECTING A
PLURALITY OF DEVICES — 602

ESTABLISHING CONNECTIONS
BETWEEN A WIRELSS
ACCESSORY AND MORE THAN
ONE DEVICES — 604

RECEIVING A
REQUEST — 606

SELECTING A
CONNECTION BASED
ON A CRITERIA — 608

SENDING THE
REQUEST TO THE
SELECTED DEVICE — 610

COMMUNICATING ON THE
CONNECTION BETWEEN THE
WIRELESS ACCESSORY AND THE
SELECTED DEVICE — 612

# FIG. 6

```
                    ┌─────────┐
                    │  START  │
                    └─────────┘
                         │
                         ▼
              ┌──────────────────────┐  ╭── 602
              │      DETECTING A      │
              │ PLURALITY OF DEVICES  │
              └──────────────────────┘
                         │
                         ▼
          ┌──────────────────────────────┐  ╭── 604
          │   ESTABLISHING CONNECTIONS    │
          │ BETWEEN A WIRELESS ACCESSORY  │
          │    AND MORE THAN ONE DEVICES  │
          └──────────────────────────────┘
                         │
                         ▼
                 ┌──────────────┐  ╭── 606
                 │  RECEIVING A │
                 │    REQUEST   │
                 └──────────────┘
                         │
                         ▼
               ┌──────────────────┐  ╭── 702
               │ CONSIDERING A FIRST │
               │      CRITERIA      │
               └──────────────────┘
                         │   ╭── 704
                         ▼
                   ╱─────────────╲        Y
                  ╱  ADDITIONAL    ╲ ──────────┐
                  ╲   CRITERIA ?   ╱           │
                   ╲─────────────╱             ▼
                         │ N          ┌──────────────────┐  ╭── 706
                         │            │   CONSIDERING    │
                         │            │ ADDITIONAL CRITERIA │
                         │            └──────────────────┘
                         │◄────────────────────┘
                         ▼
               ┌──────────────────┐  ╭── 708
               │ SELECTING AN ACTIVE │
               │    CONNECTION     │
               └──────────────────┘
                         │
                         ▼
          ┌──────────────────────────────┐  ╭── 610
          │  SENDING THE REQUEST TO THE   │
          │        SELECTED DEVICE        │
          └──────────────────────────────┘
                         │
                         ▼
          ┌──────────────────────────────┐  ╭── 612
          │     COMMUNICATING ON THE      │
          │    CONNECTION BETWEEN         │
          │ WIRELESS ACCESSORY  AND THE   │
          │       SELECTED DEVICE         │
          └──────────────────────────────┘
```

# FIG. 7

FIG. 8

FIG. 9

START

DETECTING A
**PLURALITY OF DEVICES** — 902

ESTABLISHING CONNECTIONS
BETWEEN A HANDS-FREE DEVICE
AND MORE THAN ONE DEVICES — 904

ESTABLISHING A COMMUNICATION
CHANNEL BETWEEN THE HANDS-FREE
DEVICE AND ONE OF THE DEVICES — 905

RECEIVING CONNECTION
STATUS AT THE DEVICE — 906

**RECEIVING A REQUEST** — 908

SELECTING A CONNECTION
BASED ON A CRITERIA — 910

SENDING THE
REQUEST TO THE
SELECTED DEVICE — 912

COMMUNICATING ON THE
CONNECTION BETWEEN THE
HANDS-FREE DEVICE AND THE
SELECTED DEVICE — 914

# FIG. 10

**EP 2 375 709 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070206829 A